(19) Europäisches Patentamt
European Patent Office
Office européen des brevets

(11) Veröffentlichungsnummer: **0 234 379**
**A1**

(12) **EUROPÄISCHE PATENTANMELDUNG**

(21) Anmeldenummer: **87101712.5**

(22) Anmeldetag: **07.02.87**

(51) Int. Cl.³: **A 01 N 57/20**
//(A01N57/20, 43:90)

(30) Priorität: **21.02.86 CH 695/86**
**18.12.86 CH 5060/86**

(43) Veröffentlichungstag der Anmeldung:
**02.09.87 Patentblatt 87/36**

(84) Benannte Vertragsstaaten:
**AT BE CH DE FR GB IT LI NL SE**

(71) Anmelder: **F. HOFFMANN-LA ROCHE & CO. Aktiengesellschaft**

**CH-4002 Basel(CH)**

(72) Erfinder: **Bocion, Pierre**
**Haltenrebenstrasse 104**
**CH-8408 Winterthur(CH)**

(74) Vertreter: **Urech, Peter, Dr. et al,**
**Grenzacherstrasse 124 Postfach 3255**
**CH-4002 Basel(CH)**

(54) **Herbizide Mittel mit einem Gehalt an Glyphosate.**

(57) Die Erfindung betrifft Unkrautbekämpfungsmittel, die als Wirkstoffe (a) N-Phosphonomethyl-glycin und/oder ein Salz davon, sowie (b) mindestens eine Verbindung der Formel

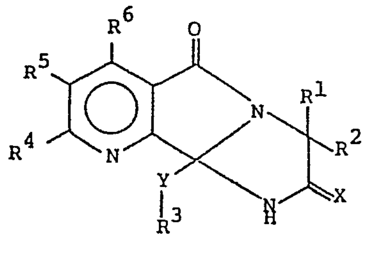

I

worin $R^1$, $R^2$, $R^3$, $R^4$, $R^5$, $R^6$, X und Y die in der Beschreibung angegebenen Bedeutungen besitzen, und, falls erforderlich, Formulierungshilfsstoffe enthalten, sowie die Herstellung und Verwendung solcher Mittel.

EP 0 234 379 A1

0234379

F. HOFFMANN-LA ROCHE & CO. Aktiengesellschaft, Basel/Schweiz

RAN 6102/58

# Herbizide Mittel mit einem Gehalt an Glyphosate

Die vorliegende Erfindung betrifft ein Unkrautbekämpfungsmittel, das dadurch gekennzeichnet ist, dass es als Wirkstoffe

(a) N-Phosphonomethyl-glycin und/oder ein Salz davon, sowie

(b) mindestens eine Verbindung der allgemeinen Formel

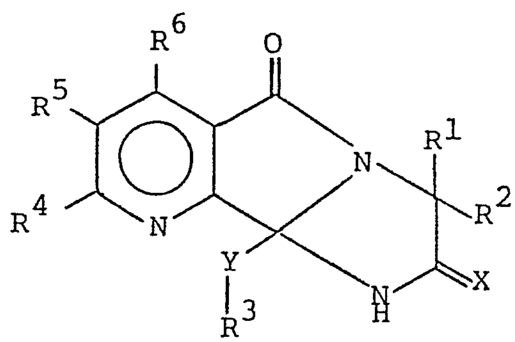

I

worin

$R^1$ $C_{1-4}$-Alkyl,

$R^2$ $C_{1-4}$-Alkyl oder $C_{3-6}$-Cycloalkyl, oder

$R^1$ und $R^2$ zusammen mit dem Kohlenstoffatom, an das sie geknüpft sind, einen $C_{3-6}$-Cycloalkanring,

Pa/16.12.86

$R^3$ Wasserstoff; gegebenenfalls mit Halogen, Hydroxy oder Cyano substituiertes $C_{1-6}$-Alkyl; $C_{2-8}$-Alkoxyalkyl; 2-Isopropylidenaminooxy-äthyl; oder $C_{3-6}$-Alkenyl,

$R^4$, $R^5$ und $R^6$ unabhängig voneinander Wasserstoff, Halogen, $C_{1-6}$-Alkyl oder Trifluormethyl oder $R^4$ und $R^5$ zusammen einen ankondensierten Benzolring,

und X und Y unabhängig voneinander Sauerstoff oder Schwefel bedeuten,

und, falls erforderlich, Formulierungshilfsstoffe enthält.

Die vorliegende Erfindung betrifft ferner ein Verfahren zur Herstellung des Unkrautbekämpfungsmittels, sowie dessen Verwendung zur Bekämpfung von Unkräutern.

Bei Verwendung des erfindungsgemässen Mittels wurde überraschenderweise gefunden, dass eine Verminderung der zu applizierenden Menge der Komponenten der Wirkstoffkombination ermöglicht wird. Daraus kann geschlossen werden, dass die einzelnen Wirkstoffe der Kombination sich in ihrer Wirkungsentfaltung gegenseitig und vorteilhaft unterstützen, d.h. ein Synergismus eintritt.

Es ergeben sich bei Verwendung des erfindungsgemässen Unkrautbekämpfungsmittels für die Landwirtschaft und den Gartenbau u.a. folgende Vorteile:

- Reduktion des Wirkstoffaufwandes zur wirksamen Bekämpfung von Unkräutern.

- Geringere Belastung von Erntegut, Boden und Wasser durch Ausbringung geringerer Wirkstoffmengen pro Hektar und Behandlung.

- Kurze Persistenz des Mittels im Boden und dadurch keine negativen Auswirkungen auf Obst-, Wein- oder Citruskulturen oder auf die nach erfolgter Ernte von Soja, Getreide und/oder Mais nachfolgende Kultur.

Unter "Halogen" ist im vorliegenden Fall Fluor, Chlor, Brom oder Jod zu verstehen. Der Alkylrest kann geradkettig oder verzweigt sein. Dies gilt auch für den bzw. jeden Alkylteil der Halogen-, Hydroxy-, Cyano- bzw. Alkoxyalkylgruppe.

Bedeutet $R^3$ Halogen-, Hydroxy- oder Cyanoalkyl, kann diese Gruppe einen oder mehrere Halogen-, Hydroxy- bzw. Cyanosubstituenten aufweisen. Die Halogenatome sind vorzugsweise Fluor- und/oder Chloratome. Beispiele solcher Gruppen sind 2,2,2-Trifluoräthyl, 2-Chloräthyl und 2,2,3,3,3-Pentafluorpropyl bzw. 2-Hydroxyäthyl und 2,3-Dihydroxypropyl.

Unabhängig voneinander ist der Pyridinring vorzugsweise unsubstituiert ($R^4$, $R^5$ und $R^6$ sind Wasserstoff) und $R^3$ vorzugsweise (mit Hydroxy substituiertes) $C_{1-6}$-Alkyl, $C_{2-8}$-Alkoxyalkyl oder 2-Isopropylidenaminooxy-äthyl.

Bevorzugte einzelne Wirkstoffe (b) sind:

1,9b-Dihydro-3-isopropyl-9b-methoxy-3-methyl-2H-imidazo-[1',2':1,2]pyrrolo[3,4-b]pyridin-2,5(3H)-dion (b1)

1,9b-Dihydro-3-isopropyl-3-methyl-9b-(n-propoxy)-2H-imidazo[1',2':1,2]pyrrolo[3,4-b]pyridin-2,5(3H)-dion (b2)

1,9b-Dihydro-9b-isopropoxy-3-isopropyl-3-methyl-2H-imidazo[1',2':1,2]pyrrolo[3,4-b]pyridin-2,5(3H)-dion (b3)

9b-(2-Aethoxyäthoxy)-1,9b-dihydro-3-isopropyl-3-methyl-2H-imidazo[1',2':1,2]pyrrolo[3,4-b]pyridin-2,5(3H)-dion (b4)

9b-Aethoxy-1,9b-dihydro-3-isopropyl-3-methyl-2H-imidazo-[1',2':1,2]pyrrolo[3,4-b]pyridin-2,5(3H)-dion (b5)

1,9b-Dihydro-9b-(2-hydroxyäthoxy)-3-isopropyl-3-methyl-2H-imidazo[1',2':1,2]pyrrolo(3,4-b]pyridin-2,5(3H)-dion (b6) und 1,9b-Dihydro-3-isopropyl-9b-(2-isopropylidenaminooxy-äthoxy)-3-methyl-2H-imidazo[1',2':1,2]pyrrolo[3,4-b]pyridin-2,5(3H)-dion (b7).

Ein besonders bevorzugtes Imidazolinonderivat (b) für das erfindungsgemässe Unkrautbekämpfungsmittel ist das 1,9b-Dihydro-3-isopropyl-9b-methoxy-3-methyl -2H-imidazo-[1',2':1,2]pyrrolo[3,4-b]pyridin-2,5(3H)-dion.

Auch die weiteren in den europäischen Patentpublikationen Nrn. 41,623, 133,309, 183,993 und 195,745 offenbarten herbiziden Wirkstoffe, welche nicht unter die obige Formel I fallen, eignen sich als herbizide Wirkstoffe in Glyphosate-haltigen Unkrautbekämpfungsmitteln.

Der im erfindungsgemässen Unkrautbekämpfungsmittel enthaltene Wirkstoff (a), N-Phosphonomethyl-glycin, ist unter dem Namen Glyphosate bekannt geworden. Die herbiziden Eigenschaften und die Herstellung des N-Phosphonomethyl-, -glycins und seiner Salze sind beispielsweise in der US-Patentschrift Nr. 3.799.758 beschrieben. Wie aus dieser Patentschrift hervorgeht, sind unter Salzen des N-Phosphonomethyl-glycins insbesondere Metall- und Ammoniumsalze sowie Salze mit starken Säuren zu verstehen, wie Alkalimetallsalze, und zwar das Lithium-, Natrium-, Kalium-, Rubidium- und Cäsiumsalz; Erdalkalimetallsalze, und zwar das Beryllium-, Magnesium-, Calcium-, Strontium- und Bariumsalz; das Kupfersalz; das Zinksalz; das Mangansalz; das Nickelsalz; das Ammoniumsalz; organische Ammoniumsalze, z.B. Alkylaminsalze (u.a. das Methylamin-, Aethylamin-, Isopropylamin-, Diäthylamin- und Triäthylaminsalz), Alkylenaminsalze (u.a. das Propylendiaminsalz), Alkanolaminsalze (u.a. das Aethanolamin-, Diäthanolamin- und N,N-Diäthyläthanolaminsalz), Arylaminsalze (u.a. das Anilin-, Phenylendiamin- und Naphthylaminsalz) und Salze von heterocyclischen Aminen

(u.a. das Pyridin- und Azepinsalz); und Salze mit Salzsäure, Schwefelsäure, Phosphorsäure, Trifluoressigsäure und Trichloressigsäure. Dazu kommen noch Trialkylsulfoniumsalze, insbesondere das Trimethylsulfoniumsalz, in Frage.

Einige der Verbindungen der Formel I sind bekannt. Sie können zweckmässigerweise dadurch hergestellt werden, dass man eine Verbindung der allgemeinen Formel

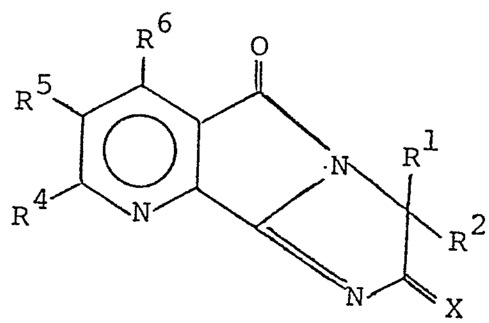

II

worin $R^1$, $R^2$, $R^4$, $R^5$, $R^6$ und X die oben angegebenen Bedeutungen besitzen,

mit einer Verbindung der allgemeinen Formel

$$R^3YH \qquad III$$

worin $R^3$ und Y die oben angegebenen Bedeutungen besitzen,

umsetzt. Die Umsetzung erfolgt zweckmässigerweise in einem Verdünnungsmittel bei Temperaturen zwischen -20°C und 100°C, vorzugsweise jedoch zwischen 0°C und 40°C. Zudem wird vorteilhaft in Gegenwart eines sauren Katalysators gearbeitet. Als Verdünnungsmittel eignen sich insbesondere organische Lösungsmittel, vorzugsweise aprotische organische Lösungsmittel, wie halogenierte Kohlenwasserstoffe, z.B. Methylenchlorid und Chloroform, und aliphatische oder cyclische Aether, z.B. Diäthyläther und Tetrahydrofuran. Bevorzugte saure Katalysatoren sind organische Säuren, wie Essigsäure, Trifluoressigsäure und p-Toluolsulfonsäure; anorganische Säuren, wie Chlorwasserstoff; Lewissäuren, wie Titantetrachlorid und Aluminiumtrichlorid; polymergebundene Säuren; polymerische Säuren; und Kieselgel. Die Isolierung und die Reinigung der so hergestellten Verbindungen I können in an sich bekannter Weise erfolgen. Die als Ausgangsmaterialien verwendeten Verbindungen der Formel II sind im allgemeinen bekannt (vgl. die europäische Patentpublikation Nr. 41,623, insbesondere deren Beispiele 3 und 21).

Das Gewichtsverhältnis der Wirkstoffe (a) und (b) liegt zweckmässigerweise im Bereich 1:0,1 bis 1:10, vorzugsweise im Bereich 1:0,5 bis 1:5. Ganz besonders bevorzugt beträgt das Gewichtsverhältnis (a):(b) ca. 1:1.

Die Wirkstoffe (a) und (b) können einzeln unter Verwendung von Formulierungshilfsstoffen in die üblichen Formulierungen, wie Stäube, Pulver, Granulate, Lösungen, Suspensionen, Emulsionen, emulgierbare Konzentrate, Pasten usw. übergeführt und diese dann im gewünschten Mischverhältnis gegebenenfalls unter Hinzufügen weiterer Formulierungshilfsstoffe, wie Wasser, vereinigt werden, beispielsweise in dem an sich bekannten Tankmix-Verfahren. Andernfalls kann man das erfindungsgemässe Mittel durch unmittelbares Vermischen der beiden Wirkstoffe (a) und (b) im gewünschten Gewichtsverhältnis und gegebenenfalls auch der geeigneten Formulierungshilfsstoffe miteinander herstellen, z.B. durch Vermischen der Wirkstoffe (a) und (b) mit festen Trägerstoffen, durch Auflösen oder Suspendieren in geeigneten Lösungs- bzw. Dispersionsmitteln, eventuell unter Verwendung von Tensiden als Netz- oder Emulgiermitteln und/oder von Dispergatoren, durch Verdünnen bereits vorbereiteter emulgierbarer Konzentrate mit Lösungs- bzw. Dispersionsmitteln usw.

Im Falle des Vorhandenseins von Formulierungshilfsstoffen in den erfindungsgemässen Mitteln enthalten die Mittel zweckmässigerweise zumindest einen der folgenden Formulierungshilfsstoffe: feste Trägerstoffe; Lösungs- bzw. Dispersionsmittel; Tenside (Netz- und Emulgiermittel);

Dispergatoren (ohne Tensidwirkung), und Stabilisatoren.

Als feste Trägerstoffe kommen im wesentlichen in Frage: natürliche Mineralstoffe, wie Kreide, Dolomit, Kalkstein, Tonerden und Kieselsäure und deren Salze (beispielsweise Kieselgur, Kaolin, Bentonit, Talkum, Attapulgit und Montmorrillonit); synethetische Mineralstoffe, wie hochdisperse Kieselsäure, Aluminiumoxid und Silikate; organische Stoffe, wie Cellulose, Stärke, Harnstoff und Kunstharze; und Düngemittel, wie Phosphate und Nitrate, wobei solche Trägerstoffe z.B. als Pulver oder als Granulate vorliegen können.

Als Lösungs- bzw. Dispersionsmittel kommen im wesentlichen in Frage: Aromaten, wie Benzol, Toluol, Xylole, höhere Alkylbenzole und Alkylnaphthaline; chlorierte Aromaten und chlorierte aliphatische Kohlenwasserstoffe, wie Chlorbenzole, Chloräthylene und Methylenchlorid; aliphatische Kohlenwasserstoffe, wie Cyclohexan und Paraffine, z.B. Erdölfraktionen; Alkohole, wie Butanol und Glykol, sowie deren Aether und Ester; Ketone, wie Aceton, Methyläthylketon, Methylisobutylketon und Cyclohexanon; und stark polare Lösungs- bzw. Dispersionsmittel, wie Dimethylformamid, N-Methylpyrrolidon und Dimethylsulfoxid, wobei solche Lösungsmittel vorzugsweise Flammpunkte von mindestens 30°C und Siedepunkte von mindestens 50°C aufweisen, und Wasser. Unter den Lösungs- bzw. Dispersionsmitteln kommen auch in Frage sogenannte verflüssigte gasförmige Streckmittel oder Trägerstoffe, die solche Produkte sind, welche bei Raumtemeratur und unter Normaldruck gasförmig sind. Beispiele solcher Produkte sind insbesondere Aerosol-Treibgase, wie Halogenkohlenwasserstoffe, z.B. Dichlordifluormethan. Liegt das erfindungsgemässe Unkrautbekämpfungsmittel in Form einer Druckgaspackung vor, so wird zweckmässigerweise zusätzlich zum Treibgas ein Lösungsmittel verwendet.

Die Tenside (Netz- und Emulgiermittel) können nicht-ionische Verbindungen sein, wie Kondensationsprodukte von

Fettsäuren, Fettalkoholen oder fettsubstituierten Phenolen mit Aethylenoxid; Fettsäureester und -äther von Zuckern oder mehrwertigen Alkoholen; die Produkte, die aus Zuckern oder mehrwertigen Alkoholen durch Kondensation mit Aethylenoxid erhalten werden; Blockpolymere von Aethylenoxid und Propylenoxid; oder Alkyldimethylaminoxide.

Die Tenside können auch anionische Verbindungen sein, wie Seifen; Fettsulfatester, z.B. Dodecylnatriumsulfat, Octadecylnatriumsulfat und Cetylnatriumsulfat; Alkylsulfonate, Arylsulfonate und fettaromatische Sulfonate, wie Alkylbenzolsulfonate, z.B. Calcium-dodecylbenzolsulfonat, und Butylnaphthalinsulfonate; und komplexere Fettsulfonate, z.B. die Amidkondensationsprodukte von Oelsäure und N-Methyltaurin und das Natriumsulfonat von Dioctylsuccinat.

Die Tenside können schliesslich kationische Verbindungen sein, wie Alkyldimethylbenzylammoniumchloride, Dialkyldimethylammoniumchloride, Alkyltrimethylammoniumchloride und äthoxylierte quaternäre Ammoniumchloride.

Als Dispergatoren (ohne Tensidwirkung) kommen im wesentlichen in Frage: Lignin, Natrium- und Ammoniumsalze von Ligninsulfonsäuren, Natriumsalze von Maleinsäureanhydrid--Diisobutylen-Copolymeren, Natrium- und Ammoniumsalze von sulfonierten Polykondensationsprodukten aus Naphthalin und Formaldehyd, und Sulfitablaugen.

Als Dispergatoren, die sich insbesondere als Verdickungs- bzw. Antiabsetzmittel eignen, können z.B. Methylcellulose, Carboxymethylcellulose, Hydroxyäthylcellulose, Polyvinylalkohol, Alginate, Caseinate und Blutalbumin eingesetzt werden.

Beispiele von geeigneten Stabilisatoren sind säurebindende Mittel, z.B. Epichlorhydrin, Phenylglycidäther und Soyaepoxide; Antioxidantien, z.B. Gallussäureester und

Butylhydroxytoluol; UV-Absorber, z.B. substituierte Benzophenone, Diphenylacrylonitrilsäureester und Zimtsäureester; und Deaktivatoren, z.B. Salze der Aethylendiaminotetraessigsäure und Polyglykole.

Die erfindungsgemässen Unkrautbekämpfungsmittel können zusätzlich zu den Wirkstoffen (a) und (b) andere Wirkstoffe, z.B. Insektizide, Akarizide, Fungizide, Pflanzenwachstumsregulatoren und Düngemittel, enthalten. Solche Kombinationsmittel eignen sich zur Verstärkung der Aktivität bzw. zur Verbreiterung des Wirkungsspektrums.

Beim Vorhandensein von Formulierungshilfsstoffen in den erfindungsgemässen Mitteln enthalten solche Mittel im allgemeinen zwischen 0,01 und 90 Gewichtsprozent, vorzugsweise zwischen 0,04 und 60 Gewichtsprozent der Kombination der Wirkstoffe (a) und (b). Sie können beispielsweise in einer Form vorliegen, die sich für die Lagerung und den Transport eignet. In solchen Formulierungen, z.B. emulgierbaren Konzentraten, ist die Gesamtwirkstoffkonzentration normalerweise im höheren Bereich, vorzugsweise zwischen 10 und 60 Gewichtsprozent, insbesondere zwischen 15 und 50 Gewichtsprozent. Diese Formulierungen können dann, z.B. mit gleichen oder verschiedenen inerten Stoffen, bis zu Wirkstoffkonzentrationen verdünnt werden, die sich für den praktischen Gebrauch eignen, also vorzugsweise ca. 0,04 bis 2,0 Gewichtsprozent, insbesondere ca. 0,1 bis 0,6 Gewichtsprozent. Die Wirkstoffkonzentrationen können jedoch auch kleiner oder grösser sein.

Wie oben erwähnt, kann die Herstellung der erfindungsgemässen Unkrautbekämpfungsmittel in an sich bekannter Weise durchgeführt werden.

Zur Herstellung pulverförmiger Präparate können die Wirkstoffe (a) und (b) mit festem Trägerstoff vermischt werden, z.B. durch Zusammenmahlen; oder man kann den festen

Trägerstoff mit einer Lösung oder Suspension der Wirkstoffe imprägnieren und dann das Lösungs- bzw. Dispersionsmittel durch Abdunsten, Erhitzen oder Absaugen unter vermindertem Druck entfernen. Durch Zusatz von Tensiden bzw. Dispergatoren kann man solche pulverförmige Mittel mit Wasser leicht benetzbar machen, so dass sie in wässrige Suspensionen, die sich z.B. als Spritzmittel eignen, übergeführt werden können.

Die Wirkstoffe (a) und (b) können auch mit einem Tensid und einem festen Trägerstoff zur Bildung eines netzbaren Pulvers vermischt werden, welches in Wasser dispergierbar ist, oder sie können mit einem festen vorgranulierten Trägerstoff zur Bildung eines granulatförmigen Produktes vermischt werden.

Wenn gewünscht, können die Wirkstoffe (a) und (b) in einem mit Wasser nicht mischbaren Lösungsmittel, wie beispielsweise einem hochsiedenden Kohlenwasserstoff, gelöst werden, das zweckmässigerweise gelöste Emulgiermittel enthält, so dass die Lösung bei Zugabe zu Wasser selbstemulgierend wirkt. Andernfalls können die Wirkstoffe mit einem Emulgiermittel vermischt und das Gemisch dann mit Wasser auf die gewünschte Konzentration verdünnt werden. Zudem können die Wirkstoffe in einem Lösungsmittel gelöst und danach mit einem Emulgiermittel gemischt werden. Ein solches Gemisch kann ebenfalls mit Wasser auf die gewünschte Konzentration verdünnt werden. Auf diese Weise erhält man emulgierbare Konzentrate bzw. gebrauchsfertige Emulsionen.

Die erfindungsgemässen Mittel sind wirksam gegen verschiedenartige Unkräuter, einschliesslich Ungräser, in Nutzpflanzenkulturen und können dementsprechend zur Bekämpfung von Unkräutern bzw. Ungräsern sowohl in der Landwirtschaft als auch im Gartenbau Verwendung finden. Sie eignen sich besonders zur Bekämpfung von Ungräsern, wie Hühnerhirse (Echinochloa crus-galli), Grüner Borstenhirse (Setaria viridis), Schwingel (Festuca spp.) und Einjährigem

Rispengras (Poa annua) sowie von dikotylen Unkräutern, wie Rauhaarigem Amaranth (Amaranthus retroflexus), Weissem Gänsefuss (Chenopodium album), Ackersenf (Sinapsis arvensis), Gundermann (Glechoma hederacea) und Ampferknöterich (Polygonum lapathifolium) in diversen Nutzpflanzenkulturen. Einige Vertreter der Wirkstoffe (b) eignen sich im Gemisch mit dem Wirkstoff (a) als Totalherbizide zur Bekämpfung von Unkräutern nach Soja-, Getreide- oder Maisernten oder als Herbizide zur Anwendung auf Industriegeländen, Strassenrändern und Wegen oder in Obst-, Wein- oder Citruskulturen bzw. Baumschulen.

Die Verwendung der erfindungsgemässen Unkrautbekämpfungsmittel, die einen weiteren Gegenstand der vorliegenden Erfindung bildet, kann nach üblichen Applikationsmethoden, wie Spritzen, Sprühen, Stäuben, Giessen oder Streuen, erfolgen. Das erfindungsgemässe Verfahren zur Bekämpfung von Unkräutern ist dadurch gekennzeichnet, dass man das gegen Unkräuter zu schützende Gut und/oder die Unkräuter mit der erfindungsgemässen Wirkstoffkombination behandelt, und zwar entweder mit der Wirkstoffkombination (a) und (b), wie oben definiert, oder vorzugsweise mit einem erfindungsgemässen Unkrautbekämpfungsmittel, das neben den Wirkstoffen auch noch Formulierungshilfsstoffe enthält.

In ihren verschiedenen Anwendungsbereichen können die erfindungsgemässen Unkrautbekämpfungsmittel in unterschiedlichen Aufwandmengen eingesetzt werden. Es werden zweckmässigerweise 200 bis 800 g, vorzugsweise 300 bis 500 g, der erfindungsgemässen Wirkstoffkombination [Wirkstoffe (a) und (b)] pro ha und Behandlung verwendet.

Die nachfolgenden Beispiele dienen zur näheren Erläuterung der Erfindung.

## I. Unkrautbekämpfungsmittel und ihre Herstellung:

### Beispiel 1

Die unten aufgeführten Bestandteile werden miteinander vermischt und anschliessend unter Verwendung einer Stiftenmühle oder vergleichbaren Mahleinreichtung fein gemahlen:

| | Gewichtsprozent |
|---|---|
| Glyphosate-isopropylaminsalz, d.h. N-Phosphonomethylglycin-isopropylaminsalz [Wirkstoff (a)] | 20 |
| 9b-(2-Aethoxyäthoxy)-1,9b-dihydro-3-isopropyl-3-methyl-2H-imidazo[1',2':1,2]-pyrrolo[3,4-b]pyridin-2,5(3H)-dion (Wirkstoff b4) | 20 |
| gefällte Kieselsäure (Mahlhilfsmittel) | 20 |
| Fettalkoholpolyäthoxylat, z.B. Oleylalkohol-(10)äthoxylat (Netzmittel) | 6 |
| Polyvinylalkohol (Dispergator) | 1 |
| Kaolin (fester Trägerstoff) | 33 |

Das resultierende Spritzpulver ergibt beim Einrühren in Wasser eine gebrauchsfertige Spritzbrühe.

### Beispiel 2

Die unten aufgeführten Bestandteile werden in Spindelöl (Mineralöl-Raffinat) dispergiert und anschliessend unter Verwendung einer Kugelmühle, Kolloidmühle oder einer vergleichbaren Nassmahlvorrichtung feinst gemahlen:

| | Gewichtsprozent |
|---|---|
| Glyphosate-isopropylaminsalz [Wirkstoff (a)] | 5 |
| 1,9b-Dihydro-3-isopropyl-9b-methoxy-3-methyl-2H-imidazo[1',2':1,2]pyrrolo[3,4-b]-pyridin-2,5(3H)-dion (Wirkstoff b1) | 25 |
| Nichtionogenes/anionaktives Oelemulgator-gemisch | 10 |
| Polyelektrolytischer Dispergator | 6 |
| Modifizierte Kieselsäure (Verdickungsmittel) | 2 |
| Spindelöl (Dispersionsmittel) | 52 |

Die resultierende stabile, fliessfähige Paste (Oel-Flowable) ergibt in Wasser eine gebrauchsfertige Spritzbrühe.

## Beispiel 3

| | |
|---|---|
| Glyphosate-isopropylaminsalz [Wirkstoff (a)] | 30 g/l |
| 1,9-Dihydro-3-isopropyl-3-methyl-9-(n-propoxy)-2H-imidazo[1',2':1,2]pyrrolo[3,4-b]pyridin-2,5(3H)-dion (Wirkstoff b2) | 120 g/l |
| Nonylphenol-(8)äthoxylat (nichtionogenes Emulgiermittel) | 80 g/l |
| Dodecylbenzolsulfonsäure-Calciumsalz (anionogenes Emulgiermittel) | 20 g/l |

| | |
|---|---|
| N-Methylpyrrolidon (Lösungsmittel) | 700 g/l |
| Xylol (Lösungsmittel) | ad 1 l |

Die oben aufgeführten Wirkstoffe (a) und (b) werden zusammen mit den beiden Emulgiermitteln in N-Methylpyrrolidon gelöst, und die Lösung wird mit Xylol auf 1 l ergänzt. Die resultierende Lösung lässt sich in Wasser emulgieren und ergibt so eine gebrauchsfertige Spritzbrühe.

## II. Verwendung der Unkrautbekämpfungsmittel:

### Beispiel 4

Zur Bekämpfung von Unkräutern bzw. Ungräsern der Spezies

(i) Agropyrum repens
(ii) Echinochloa crus-galli
(iii) Setaria viridis
(iv) Festuca spp.
(v) Poa annua
(vi) Chenopodium album
(vii) Polygonum lapathifolium
(viii) Amaranthus retroflexus

unter Praxisbedingungen wurden die Wirkstoffkombinationen wie folgt angewandt:

Es wurde ein natürlicher Unkrautbestand der obenerwähnten Spezies (Pflanzenwuchshöhe 10-25 cm je nach Spezies) im Spätsommer im Nachauflaufverfahren behandelt. Eine Spritzbrühe wurde im Tankmix-Verfahren durch Vermischen der einzelnen Wirkstoffe (Glyphosate-isopropylaminsalz und Komponente b1 bzw. b4) mit dem Formulierungshilfsstoff Genol® [einem emulgierenden Mineralöladditiv (Ciba-Geigy)] in Wasser bereitgestellt und auf den Unkrautbestand (Spritzbrühemenge 500 l/ha, Parzellengrösse 20 $m^2$) unter Verwendung

eines Traktors mit 180 Teejet-Düsen gespritzt. Während der Spritzarbeit war die Temperatur 15°C, die Luftfeuchtigkeit 60-70% und der Himmel bedeckt. 72 Stunden nach der Behandlung setzte Regen ein (Totalmenge 0,8 mm). Die Auswertung dieses Versuchs erfolgte 42 Tage nach der Applikation, wobei das nekrotische Gewebe der behandelten Unkräuter visuell festgestellt und in Prozent zur unbehandelten Kontrolle geschätzt wurde.

Die Ergebnisse sind in der nachfolgenden Tabelle zusammengestellt:

| Wirkstoff(e) | Dosierung g Wirkstoff/ha | %Nekrose an Unkräutern (i) - (viii) | | | | | |
|---|---|---|---|---|---|---|---|
| | | (i) | (ii) | (iii) | (iv) | (v) | (vi/vii/viii) |
| b1 | 250<br>500<br>1000<br>2000 | 20<br>80<br>100<br>100 | 40<br>100<br>100<br>100 | 50<br>90<br>100<br>100 | 0<br>80<br>100<br>100 | 0<br>60<br>100<br>100 | 30<br>90<br>100<br>100 |
| b4 | 250<br>500<br>1000<br>2000 | 30<br>80<br>90<br>90 | 40<br>80<br>100<br>100 | 60<br>80<br>100<br>100 | 10<br>40<br>60<br>90 | 0<br>40<br>60<br>100 | 30<br>50<br>70<br>100 |
| Glyphosate-isopropylamin-salz | 100 | 0 | 0 | 0 | 0 | 0 | 0 |
| Glyphosate-isopropylamin-salz + b1 | 100 + 250<br>100 + 500<br>100 + 1000 | 90<br>90<br>100 | 100<br>100<br>100 | 100<br>100<br>100 | 100<br>100<br>100 | 90<br>100<br>100 | 100<br>100<br>100 |
| Glyphosate-isopropylamin-salz + b4 | 100 + 250<br>100 + 500<br>100 + 1000 | 80<br>100<br>100 | 90<br>100<br>100 | 100<br>100<br>100 | 90<br>100<br>100 | 80<br>100<br>100 | 90<br>100<br>100 |
| Glyphosate-isopropylamin-salz | 300 | 0 | 0 | 0 | 0 | 0 | 0 |
| Glyphosate-isopropylamin-salz + b1 | 300 + 250<br>300 + 500<br>300 +1000 | 90<br>100<br>100 | 90<br>100<br>100 | 80<br>100<br>100 | 80<br>100<br>100 | 70<br>100<br>100 | 80<br>100<br>100 |
| Glyphosate-isopropylamin-salz + b4 | 300 + 250<br>300 + 500<br>300 + 1000 | 50<br>90<br>100 | 60<br>100<br>100 | 60<br>100<br>100 | 30<br>100<br>100 | 30<br>90<br>100 | 50<br>100<br>100 |
| Glyphosate-isopropylamin-salz | 2500 | 100 | 100 | 100 | 100 | 100 | 100 |

## Beispiel 5

Zur Bekämpfung von Ungräsern bzw. breitblättrigen Unkräutern der Spezies

| Spezies | |
|---|---|
| Agropyron repens<br>Lolium multiflorum<br>Echinochloa crus-galli | Ungräser |
| Capsella bursa-pastoris<br>Chenopodium album<br>Epilobium roseum<br>Lamium purpureum<br>Polygonum persicaria<br>Sonchus arvensis<br>Taraxacum officinale<br>Veronica persica | breitblättrige Unkräuter |

unter Praxisbedingungen wurde die Wirkstoffkombination Glyphosate-isopropylaminsalz + b6 wie folgt angewandt:

Es wurde ein natürlicher Ungras- und Unkrautbestand der obenerwähnten Spezies (Pflanzengrösse 5-10 cm, je nach Spezies) im Hochsommer im Nachauflaufverfahren behandelt. Eine Spritzbrühe wurde im Tankmix-Verfahren durch Vermischen der einzelnen Wirkstoffe (Glyphosate-isopropylaminsalz und Wirkstoff b6) mit dem Netzmittel ACR 4008 [Nonylphenol--(8)äthoxylat, 0,5 Volumenprozent in Wasser] in Wasser bereitgestellt und auf den Ungras- und Unkrautbestand (Parzellengrösse 10 $m^2$) bei einer Spritzbrühmenge 500 l/ha und unter Verwendung eines Traktors mit 4 Teejet-Düsen gespritzt. Während der Spritzarbeit war die Temperatur 26°C, und die relative Luftfeuchtigkeit betrug 45%. 13 Stunden nach der Behandlung setzte Regen ein (Totalmenge 4,2 mm). Die Auswertung dieses Versuchs erfolgte 56 Tage nach der Applikation, wobei das nekrotische Gewebe der behandelten Ungräser bzw. Unkräuter visuell festgestellt und in Prozent

zur unbehandelten Kontrolle geschätzt wurde.

Die Ergebnisse (Durchschnittswerte) sind in der nachfolgenden Tabelle zusammengestellt.

| Wirkstoff(e) | Dosierung g Wirkstoff/ha | %Nekrose an Ungräsern und breitblättrigen Unkräutern | |
|---|---|---|---|
| | | Ungräser | Breitblättrige Unkräuter |
| b6 | 300 | 30 | 50 |
| Glyphosate-isopropyl-aminsalz | 300 | 20 | 20 |
| Glyphosate-isopropyl-aminsalz + b6 | 300 + 300 | 60 | 90 |

## Beispiel 6

Der Versuch des Beispiels 5 wurde wiederholt, jedoch mit den folgenden Ungräsern bzw. breitblättrigen Unkräutern (Pflanzengrösse 10-30 cm je nach Spezies; Parzellengrösse 10 $m^2$), zusätzlich bei der Dosierung 600 g Wirkstoff/ha und mit einer Auswertung 51 Tage nach der Applikation. In diesem Fall waren Temperatur und relative Luftfeuchtigkeit während der Spritzarbeit 25°C bzw. 48%, und 24 Stunden nach

der Behandlung setzte Regen ein (Totalmenge 4,2 mm).

| | |
|---|---|
| Dactylis glomerate | - Ungras |
| Polygonum persicaria<br>Rumex obtusifolius<br>Sonchus arvensis<br>Taraxacum officinale<br>Trifolium repens<br>Veronica persica | breitblättrige Unkräuter |

Die Ergebnisse (Durchschnittswerte) sind in der nachfolgenden Tabelle zusammengestellt.

| Wirkstoff(e) | Dosierung g Wirkstoff/ha | %Nekrose am Ungras und an breitblättrigen Unkräutern | |
|---|---|---|---|
| | | Ungras | Breitblättrige Unkräuter |
| b6 | 300<br>600 | 0<br>0 | 0<br>0 |
| Glyphosate-isopropyl-aminsalz | 300<br>600 | 0<br>50 | 0<br>55 |
| Glyphosate-isopropyl-aminsalz + b6 | 300 + 300<br>600 + 600 | 65<br>90 | 60<br>90 |

## Beispiel 7

Der Versuch des Beispiels 5 wurde wiederholt, jedoch mit den folgenden Ungräsern bzw. breitblättrigen Unkräutern (Pflanzengrösse 30-40 cm je nach Spezies; Parzellengrösse 10 $m^2$) und mit Auswertung 37 Tage nach der Applikation. In diesem Fall waren Temperatur und relative Luftfeuchtigkeit während der Spritzarbeit 25°C bzw. 33%, und 26 Stunden nach der Behandlung setzte Regen ein (Totalmenge 17,5 mm).

| | |
|---|---|
| Agropyron repens<br>Dactylis glomerata<br>Echinochloa crus-galli<br>Setaria viridis | Ungräser |
| Polygonum persicaria<br>Rumex obtusifolius<br>Sonchus arvensis<br>Taraxacum officinale<br>Trifolium pratense | breitblättrige Unkräuter |

Die Ergebnisse (Durchschnittswerte) sind in der nachfolgenden Tabelle zusammengestellt.

| Wirkstoff(e) | Dosierung g Wirkstoff/ha | %Nekrose an Ungräsern und breitblättrigen Unkräutern | |
|---|---|---|---|
| | | Ungräser | Breitblättrige Unkräuter |
| b6 | 300 | 35 | 40 |
| Glyphosate-isopropyl-aminsalz | 300 | 10 | 10 |
| Glyphosate-isopropyl-aminsalz + b6 | 300 + 300 | 70 | 75 |

Herstellung der Wirkstoffe (b):

1,9-Dihydro-3-isopropyl-9b-methoxy-3-methyl-2H-imidazo-[1',2':1,2]pyrrolo[3,4-b]pyridin-2,5(3H)-dion (b1)

Zu einer Lösung von 200 g 3-Isopropyl-3-methyl-2H-imidazo[1',2':1,2]pyrrolo[3,4-b]pyridin-2,5(3H)-dion in 900 ml Methylacetat und 100 ml absolutem Methanol werden 100 g Kieselgel gegeben, dann wird die resultierende Suspension während ca. 16 Stunden bei Raumtemperatur gerührt. Anschliessend filtriert man das Gemisch, dampft das Filtrat zur Trockene ein und kristallisiert den Rückstand aus Aethylacetat/n-Hexan. Man erhält das 1,9b-Dihydro-3-isopropyl-9b-methoxy-3-methyl -2H-imidazo[1',2':1,2]pyrrolo-[3,4-b]pyridin-2,5(3H)-dion als farblose Kristalle, Smp.

157-158°C.

1,9b-Dihydro-3-isopropyl-3-methyl-9b-(n-propoxy)-2H-imidazo-[1',2':1,2]pyrrolo[3,4-b]pyridin-2,5(3H)-dion (b2)

Dieser Wirkstoff wird analog dem oben beschriebenen Verfahren hergestellt, wobei Methanol durch n-Propanol ersetzt wird. Smp. 140-142°C.

9b-(2-Aethoxyäthoxy)-1,9b-dihydro-3-isopropyl-3-methyl-2H-imidazo[1',2':1,2]pyrrolo[3,4-b]pyridin-2,5(3H)-dion (b4)

Man versetzt eine Lösung von 2 g 3-Isopropyl-3-methyl -2H-imidazo[1',2':1,2]pyrrolo[3,4-b]pyridin-2,5(3H)-dion in 90 ml Methylenchlorid und 10 ml 2-Aethoxyäthanol mit 0,5 ml Trifluoressigsäure und rührt das Reaktionsgemisch 60 Minuten bei Raumtemperatur. Anschliessend wird das Gemisch unter vermindertem Druck zur Trockene eingedampft und der Rückstand aus Aethylacetat/n-Hexan kristallisiert. Man erhält dabei farblose Kristalle, Smp. 115-117°C, von 9b-(2-Aethoxyäthoxy)-1,9b-dihydro-3-isopropyl-3-methyl -2H-imidazo-[1',2':1,2]pyrrolo[3,4-b]pyridin-2,5(3H)-dion.

1,9b-Dihydro-9b-isopropoxy-3-isopropyl-3-methyl-2H-imidazo [1',2':1,2]pyrrolo[3,4-b]pyridin-2,5(3H)-dion (b3)

Dieser Wirkstoff wird analog dem oben beschriebenen Verfahren hergestellt, wobei 2-Aethoxyäthanol durch Isopropanol ersetzt wird. Smp. 158-160°C.

1,9b-Dihydro-9b-(2-hydroxyäthoxy)-3-isopropyl-3-methyl-2H-imidazo[1',2':1,2]pyrrolo[3,4-b]pyridin-2,5(3H)-dion (b6)

Auch dieser Wirkstoff wird analog dem oben beschriebenen Verfahren zur Herstellung des Wirkstoffes b4 hergestellt, wobei 2-Aethoxyäthanol durch Aethylenglykol ersetzt wird. Smp. 130-132°C.

9b-Aethoxy-1,9b-dihydro-3-isopropyl-3-methyl-2H-imidazo-[1',2':1,2]pyrrolo[3,4-b]pyridin-2,5(3H)-dion (b5)

Man versetzt eine Lösung von 2 g 3-Isopropyl-3-methyl-2H-imidazo[1',2':1,2]pyrrolo[3,4-b]pyridin-2,5(3H)-dion in 90 ml Chloroform und 10 ml Aethanol mit 0,5 ml Trifluoressigsäure und rührt das Reaktionsgemisch 10 Minuten bei Raumtemperatur. Anschliessend wird die Lösung mit gesättigter Natriumbicarbonatlösung gewaschen, über wasserfreiem Magnesiumsulfat getrocknet und unter vermindertem Druck zur Trockene eingedampft. Der Rückstand wird aus Aethylacetat/-n-Hexan kristallisiert, und man erhält dabei farblose Kristalle, Smp. 128-130°C, von 9b-Aethoxy-1,9b-dihydro-3-isopropyl -3-methyl-2H-imidazo[1',2':1,2]pyrrolo[3,4-b]pyridin-2,5(3H)-dion.

1,9b-Dihydro-3-isopropyl-9b-(2-isopropylidenaminooxy-äthoxy)-3-methyl-2H-imidazo[1',2':1,2]pyrrolo[3,4-b]pyridin-2,5(3H)-dion (b7)

Zu einer Lösung von 3,9 g 3-Isopropyl-3-methyl-2H-imidazo[1',2':1,2]pyrrolo [3,4-b]pyridin-2,5(3H)-dion und 3,0 g 2-Isopropylidenaminooxy-äthanol in 25 ml Tetrahydrofuran werden einige Tropfen Essigsäure gegeben, und das Reaktionsgemisch wird ca. 16 Stunden unter Argon gerührt. Anschliessend dampft man das Lösungsmittel und den überschüssigen Alkohol unter vermindertem Druck ab und nimmt den Rückstand in Diäthyläthr auf. Zugabe von n-Hexan führt zum Kristallisieren des Produktes. Man erhält das 1,9b-Dihydro-3-isopropyl-9b-(2-isopropylidenaminooxy-äthoxy) -3-methyl-2H-imidazo[1',2':1,2]pyrrolo[3,4-b]pyridin -2,5(3H)-dion als farblose Kristalle, Smp. 131-132°C.

## Patentansprüche

1. Unkrautbekämpfungsmittel, dadurch gekennzeichnet, dass es als Wirkstoffe

(a) N-Phosphonomethyl-glycin und/oder ein Salz davon, sowie

(b) mindestens eine Verbindung der allgemeinen Formel

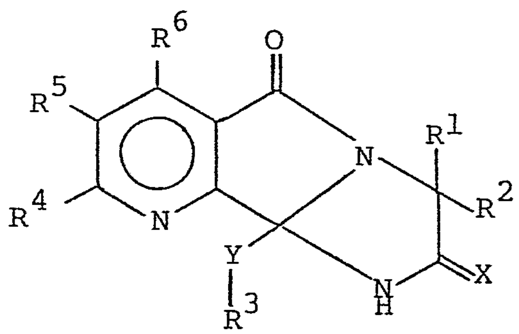

I

worin

$R^1$ $C_{1-4}$-Alkyl,

$R^2$ $C_{1-4}$-Alkyl oder $C_{3-6}$-Cycloalkyl, oder

$R^1$ und $R^2$ zusammen mit dem Kohlenstoffatom, an das sie geknüpft sind, einen $C_{3-6}$-Cycloalkanring,

$R^3$ Wasserstoff; gegebenenfalls mit Halogen, Hydroxy oder Cyano substituiertes $C_{1-6}$-Alkyl; $C_{2-8}$-Alkoxyalkyl; 2-Isopropylidenaminooxy-äthyl; oder $C_{3-6}$-Alkenyl,

$R^4$, $R^5$ und $R^6$ unabhängig voneinander Wasserstoff, Halogen, $C_{1-6}$-Alkyl oder Trifluormethyl oder $R^4$ und $R^5$ zusammen einen ankondensierten Benzolring,

und X und Y unabhängig voneinander Sauerstoff oder Schwefel bedeuten,

und, falls erforderlich, Formulierungshilfsstoffe enthält.

2. Unkrautbekämpfungsmittel nach Anspruch 1, dadurch gekennzeichnet, dass das Gewichtsverhältnis des Wirkstoffs (a) zum Wirkstoff (b) im Bereich 1:0,1 bis 1:10 liegt.

3. Unkrautbekämpfungsmittel nach Anspruch 2, dadurch gekennzeichnet, dass das Gewichtsverhältnis im Bereich 1:0,5 bis 1:5 liegt.

4. Unkrautbekämpfungsmittel nach einem der Ansprüche 1 bis 3, dadurch gekennzeichnet, dass es Formulierungshilfsstoffe sowie zwischen 0,01 und 90 Gewichtsprozent der Kombination der Wirkstoffe (a) und (b) enthält.

5. Umkrautbekämpfungsmittel nach einem der Ansprüche 1 bis 4, dadurch gekennzeichnet, dass es als Wirkstoff (a) das N-Phosphonomethyl-glycin-isopropylaminsalz (Glyphosate-isopropylaminsalz) enthält.

6. Unkrautbekämpfungsmittel nach einem der Ansprüche 1 bis 5, dadurch gekennzeichnet, dass der Pyridinring der Verbindung der Formel I unsubstituiert ist.

7. Unkrautbekämpfungsmittel nach einem der Ansprüche 1 bis 6, dadurch gekennzeichnet, dass $R^3$ der Verbindung der Formel I gegebenenfalls mit Hydroxy substituiertes $C_{1-6}$-Alkyl, $C_{2-8}$-Alkoxyalkyl oder 2-Isopropylidenamino-oxy-äthyl bedeutet.

8. Unkrautbekämpfungsmittel nach einem der Ansprüche 1 bis 7, dadurch gekennzeichnet, dass der Wirkstoff (b) mindestens eine aus der Gruppe

1,9b-Dihydro-3-isopropyl-9b-methoxy-3-methyl-2H-imidazo[1',2':1,2]pyrrolo[3,4-b]pyridin-2,5(3H)-dion,

1,9b-Dihydro-3-isopropyl-3-methyl-9b-(n-propoxy)-2H-imidazo[1',2':1,2]pyrrolo[3,4-b]pyridin-2,5(3H)-dion,

1,9b-Dihydro-9b-isopropoxy-3-isopropyl-3-methyl-2H-imidazo[1',2':1,2]pyrrolo[3,4-b]pyridin-2,5(3H)-dion und

9b-(2-Aethoxyäthoxy)-1,9b-dihydro-3-isopropyl-3-methyl-2H-imidazo[1',2':1,2]pyrrolo[3,4-b]pyridin-2,5(3H)-dion

ausgewählte Verbindung ist.

9. Unkrautbekämpfungsmittel nach einem der Ansprüche 1 bis 7, dadurch gekennzeichnet, dass der Wirkstoff (b) mindestens eine aus der Gruppe

9b-Aethoxy-1,9b-dihydro-3-isopropyl-3-methyl-2H-imidazo[1',2':1,2]pyrrolo[3,4-b]pyridin-2,5(3H)-dion,

1,9b-Dihydro-9b-(2-hydroxyäthoxy)-3-isopropyl-3-methyl-2H-imidazo[1',2':1,2]pyrrolo[3,4-b]pyridin-2,5(3H)-dion und 1,9b-Dihydro-3-isopropyl-9b-(2-isopropylidenaminooxyäthoxy)-3-methyl-2H-imidazo[1',2':1,2]pyrrolo[3,4-b]pyridin-2,5(3H)-dion

ausgewählte Verbindung ist.

10. Verfahren zur Herstellung eines Unkrautbekämpfungsmittels gemäss Anspruch 1, dadurch gekennzeichnet, dass man den Wirkstoff (a) mit dem Wirkstoff (b) und gegebenenfalls auch mit Formulierungshilfsstoffen vermischt.

11. Verfahren zur Bekämpfung von Unkräutern, dadurch gekennzeichnet, dass man das gegen Unkräuter zu schützende Gut und/oder die Unkräuter mit einer wirksamen Menge eines Unkrautbekämpfungsmittels gemäss einem der Ansprüche 1 bis 9 behandelt.

12. Verwendung eines Mittels gemäss einem der Ansprüche 1 bis 9 zur Bekämpfung von Unkräutern.

***

## Patentansprüche für Oesterreich

1. Unkrautbekämpfungsmittel, dadurch gekennzeichnet, dass es als Wirkstoffe

(a) N-Phosphonomethyl-glycin und/oder ein Salz davon, und

(b) mindestens eine Verbindung der allgemeinen Formel

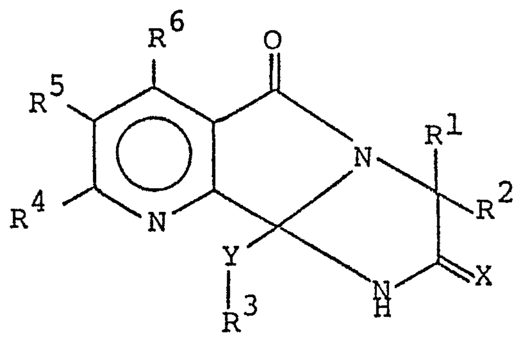

I

worin

$R^1$ $C_{1-4}$-Alkyl,

$R^2$ $C_{1-4}$-Alkyl oder $C_{3-6}$-Cycloalkyl, oder

$R^1$ und $R^2$ zusammen mit dem Kohlenstoffatom, an das sie geknüpft sind, einen $C_{3-6}$-Cycloalkanring,

$R^3$ Wasserstoff; gegebenenfalls mit Halogen, Hydroxy oder Cyano substituiertes $C_{1-6}$-Alkyl; $C_{2-8}$-Alkoxyalkyl; 2-Isopropylidenaminooxy-äthyl; oder $C_{3-6}$-Alkenyl,

$R^4$, $R^5$ und $R^6$ unabhängig voneinander Wasserstoff, Halogen, $C_{1-6}$-Alkyl oder Trifluormethyl oder $R^4$ und $R^5$ zusammen einen ankondensierten Benzolring,

und X und Y unabhängig voneinander Sauerstoff oder Schwefel bedeuten,

sowie Formulierungshilfsstoffe enthält.

2. Unkrautbekämpfungsmittel nach Anspruch 1, dadurch gekennzeichnet, dass das Gewichtsverhältnis des Wirkstoffs (a) zum Wirkstoff (b) im Bereich 1:0,1 bis 1:10 liegt.

3. Unkrautbekämpfungsmittel nach Anspruch 2, dadurch gekennzeichnet, dass das Gewichtsverhältnis im Bereich 1:0,5 bis 1:5 liegt.

4. Unkrautbekämpfungsmittel nach einem der Ansprüche 1 bis 3, dadurch gekennzeichnet, dass es zwischen 0,01 und 90 Gewichtsprozent der Kombination der Wirkstoffe (a) und (b) enthält.

5. Unkrautbekämpfungsmittel nach einem der Ansprüche 1 bis 4, dadurch gekennzeichnet, dass es als Wirkstoff (a) das N-Phosphonomethyl-glycin-isopropylaminsalz (Glyphosate-isopropylaminsalz) enthält.

6. Unkrautbekämpfungsmittel nach einem der Ansprüche 1 bis 5, dadurch gekennzeichnet, dass der Pyridinring der Verbindung der Formel I unsubstituiert ist.

7. Unkrautbekämpfungsmittel nach einem der Ansprüche 1 bis 6, dadurch gekennzeichnet, dass $R^3$ der Verbindung der Formel I gegebenenfalls mit Hydroxy substituiertes $C_{1-6}$-Alkyl, $C_{2-8}$-Alkoxyalkyl oder 2-Isopropylidenamino-oxy-äthyl bedeutet.

8. Unkrautbekämpfungsmittel nach einem der Ansprüche 1 bis 7, dadurch gekennzeichnet, dass der Wirkstoff (b) mindestens eine aus der Gruppe

1,9b-Dihydro-3-isopropyl-9b-methoxy-3-methyl-2H-imidazo[1',2':1,2]pyrrolo[3,4-b]pyridin-2,5(3H)-dion,

1,9b-Dihydro-3-isopropyl-3-methyl-9b-(n-propoxy)-2H-imidazo[1',2':1,2]pyrrolo[3,4-b]pyridin-2,5(3H)-dion,

1,9b-Dihydro-9b-isopropoxy-3-isopropyl-3-methyl-2H-imidazo[1',2':1,2]pyrrolo[3,4-b]pyridin-2,5(3H)-dion und

9b-(2-Aethoxyäthoxy)-1,9b-dihydro-3-isopropyl-3-methyl-2H-imidazo[1',2':1,2]pyrrolo[3,4-b]pyridin-2,5(3H)-dion

ausgewählte Verbindung ist.

9. Unkrautbekämpfungsmittel nach einem der Ansprüche 1 bis 7, dadurch gekennzeichnet, dass der Wirkstoff (b) mindestens eine aus der Gruppe

9b-Aethoxy-1,9b-dihydro-3-isopropyl-3-methyl-2H-imidazo[1',2':1,2]pyrrolo[3,4-b]pyridin-2,5(3H)-dion,

1,9b-Dihydro-9b-(2-hydroxyäthoxy)-3-isopropyl-3-methyl-2H-imidazo[1',2':1,2]pyrrolo[3,4-b]pyridin-2,5(3H)-dion und 1,9b-Dihydro-3-isopropyl-9b-(2-isopropylidenaminooxyäthoxy)-3-methyl-2H-imidazo[1',2':1,2]pyrrolo[3,4-b]pyridin-2,5(3H)-dion

ausgewählte Verbindung ist.

10. Verfahren zur Herstellung eines Unkrautbekämpfungsmittels gemäss Anspruch 1, dadurch gekennzeichnet, dass man den Wirkstoff (a) mit dem Wirkstoff (b) sowie mit Formulierungshilfsstoffen vermischt.

11. Verfahren zur Bekämpfung von Unkräutern, dadurch gekennzeichnet, dass man das gegen Unkräuter zu schützende Gut und/oder die Unkräuter mit einer wirksamen Menge eines Unkrautbekämpfungsmittels gemäss einem der Ansprüche 1 bis 9 behandelt.

12. Verwendung eines Mittels gemäss einem der Ansprüche 1 bis 9 zur Bekämpfung von Unkräutern.

***

Europäisches Patentamt

# EUROPÄISCHER RECHERCHENBERICHT

Nummer der Anmeldung 0234379

EP 87 10 1712

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | EP-A-0 133 309 (AMERICAN CYANAMID)<br>----- | | A 01 N 57/20 //<br>(A 01 N 57/20<br>A 01 N 43:90 ) |
| | | | RECHERCHIERTE SACHGEBIETE (Int. Cl.4) |
| | | | A 01 N |

Der vorliegende Recherchenbericht wurde für alle Patentansprüche erstellt.

| Recherchenort | Abschlußdatum der Recherche | Prüfer |
|---|---|---|
| DEN HAAG | 05-06-1987 | DECORTE D. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument